# EUROPÄISCHE PATENTSCHRIFT

(11) **EP 2 305 361 B1**
(45) Veröffentlichungstag und Bekanntmachung des Hinweises auf die Patenterteilung: **19.12.2012**
(21) Anmeldenummer: 10013528.4
(22) Anmeldetag: 09.09.2006
(51) Int. Cl.: B01D 50/00, B01D 45/12

(54) **System zur Gasreinigung**
Gas purification system
Système de nettoyage de gaz

(30) Priorität: 24.12.2005 DE 102005062245
(43) Veröffentlichungstag der Anmeldung: 06.04.2011
(62) Teilanmeldung aus: 06791954.8
(73) Patentinhaber: Hydac Process Technology GmbH, 66538 Neunkirchen (DE)
(72) Erfinder: Knut, Herges, 66583 Spiesen-Elversberg (DE); Wnuk, Ralf, 66450 Bexbach/Kleinottweiler (DE)
(74) Vertreter: Bartels & Partner

(56) Entgegenhaltungen:
- WO-A2-2004/067148
- DE-A1- 3 605 070
- JP-A- 5 141 815
- US-A1- 2001 005 986

## Beschreibung

Die Erfindung bezieht sich auf ein System zur Gasreinigung gemäß der Merkmalsausgestaltung des Oberbegriffes des Patentanspruches 1.

Systeme dieser Art, die nicht nur Verschmutzungen durch Feststoffbelastungen beseitigen sollen, sondern betreffende gasförmige Medien auch entfeuchten sollen, sind bekannt und werden, wenn eine Koalisierung von Flüssigkeitspartikeln an der innerhalb eines Gehäuses befindlichen Filtereinrichtung erfolgt, auch als Coalescer bezeichnet. Derartige Systeme werden oft in Verbindung mit abgaserzeugenden Prozessen benutzt, wobei Abgasströme verhältnismäßig hoher Temperaturen und gegebenenfalls mit sehr hohen Drücken gehandhabt werden.

Durch die WO 2004/067148 A2 ist ein gattungsgemäßes System zur Gasreinigung bekannt, das ein Gehäuse mit einem ersten Raum aufweist, in dem das zu reinigende Gas einströmbar ist und mit einem zweiten Raum, aus dem das gereinigte Gas austritt, wobei zwischen den genannten Räumen eine vom Gas durchströmbare Filtereinrichtung angeordnet ist, welche Filtermedien sowohl zur Absonderung von Feststoffpartikeln als auch zur Entfeuchtung des Gases durch Abscheidung koalisierter Flüssigkeit aufweist, wobei das System stromaufwärts der Filtereinrichtung eine Anordnung zur Vorentfeuchtung des Gases aufweist, in Form eines Zyklons, der in dem Gehäuse aufgenommen ist. Ferner weist das Gehäuse am oberen Ende einer den Zyklon mitbildenden Kreisringfläche einen den ersten Raum vom zweiten Raum trennenden Boden auf, an dem ein einen Durchgang bildender Sitz ausgebildet ist, in den ein in den inneren Hohlraum der Filtereinrichtung führender Anschlussstutzen der Filtereinrichtung einsetzbar ist, über den das vorentfeuchtete Gas aus dem Zyklon in den inneren Hohlraum der Filtereinrichtung einströmt. Am Gehäuse ist eine Einströmöffnung für das zu reinigende Gas derart angeordnet, dass dieses die Kreisringfläche anströmt.

Neben dem Anschlussstutzen weist der den ersten Raum vom zweiten Raum trennende Boden bei der der bekannten Lösung eine Ventileinrichtung auf, die mit ihrer einen Seite in den Anschlussstutzen des Zyklons und auf der anderen Seite in den zweiten Raum einmündet, der bis auf Fluidauslassstellen für das gefilterte und insoweit abgereinigte Fluid keine weiteren Durchlassstellen zur Umgebung hin aufweist. Dieser insoweit nach außen hin abgeschlossene Raum dient der Aufnahme von Feststoff-Partikelverschmutzungen, die sich auf der Oberseite des trennenden Bodens ablagern und bei einem gewissen Anfall an den genannten Feststoffverschmutzungen unter Einbezug gewisser Mengen an koalisierter Flüssigkeit öffnet die tellerartige Ventileinrichtung und die Verschmutzungspartikel können zusammen mit Resten an koalisierter Flüssigkeit über den genannten Anschlussstutzen und einen weiteren am unteren Ende des Gehäuses angeordneten Auffangbehälter aus der Vorrichtung zentral abgeführt werden. Die dahingehende Schmutzpartikelabfuhr setzt voraus, dass das System zur Gasreinigung vollständig abgeschaltet wird oder jedenfalls nur mit einem derart geringen Leistungsvermögen gefahren wird, dass im Anschlussstutzen des Zyklons ein Druckabfall dergestalt eintreten kann, dass der tellerartige Ventilkörper der Ventileinrichtung auch öffnet, der ansonsten unter dem Betriebsdruck des Systems in seiner schließenden Anlage gehalten ist. Für eine erfolgreiche Partikelschmutzentfernung ist also das bekannte System zur Gasreinigung nur in diskontinuierlicher Weise zu betreiben oder bei verminderter Leistung. Dies steht einer besonders guten Reinigungswirkung entgegen.

Durch die JP 05141815 A ist ein Ölseparator bekannt mit einem Gehäuse, das über einen trennenden Boden in im wesentlichen zwei Gehäusehälften unterteilt ist, wobei die untere Gehäusehälfte als Zyklon dient und in der oberen Gehäusehälfte ist eine Filtereinrichtung eingesetzt, die an ihrer unteren Endkappe einen Anschlussstutzen aufweist, der den trennenden Boden durchgreift und mit seinem einen freien Ende in den Zyklon mündet und mit seinem anderen freien Ende in den inneren Hohlraum der Filtereinrichtung eingreift. Insoweit ist der Anschlussstutzen einstückiger Bestandteil der Endkappe der Filtereinrichtung.

Diese bekannte Zyklonabscheidelösung weist oberhalb des trennenden Bodens in der Wand des Gehäuses eine Entleerungsöffnung auf, die es erlaubt die koalisierte Flüssigkeit aus dem System nach außen hin abzuführen. Da relativ große Mengen an koalisierter Flüssigkeit beim Filtrationsbetrieb anfallen können, ist der obere Gehäuseraum entsprechend groß dimensioniert, um derart ein großes Kammervolumen zur Ansammlung von an der Filtereinrichtung koalisierter Flüssigkeit auszubilden. Bei vorgebbarer Baugröße geht dies aber wiederum zu Lasten der wirksamen Filterflächen der Filtereinrichtung, d. h. die jeweilige Filtereinrichtung muss entsprechend klein aufbauend ausgebildet sein, um noch genügend Kammerraum zur Verfügung zu stellen zwecks Ansammlung der koalisierten Flüssigkeit vor Abfuhr über die in der Gehäusewand vorgesehene Entleerungsöffnung.

Des Weiteren weist die bekannte Lösung keinen am unteren Ende des Gehäuses vorgesehenen Auffangbehälter auf, der die bei der Vorentfeuchtung abgeschiedene Flüssigkeit aufnehmen könnte, was wiederum einer weitestgehenden Entfeuchtung des Fluidstroms entgegensteht.

Aus DE 36 05 070 A1 ist ein Zyklonabscheider mit einem Zyklongehäuse, einer am Deckel vorgesehenen, nach außen fördernden Leitspirale und einer am Boden vorgesehenen, nach innen fördernden Leitspirale, bekannt. Die am Deckel des Zyklongehäuses vorgesehene Leitspirale ist im Bereich des Einlaufs für ein einströmendes Fluid vorgesehen, wobei das äußere Ende der Leitspirale dem Einlauf für das Fluid diametral gegenüberliegend angeordnet ist.

Ausgehend von diesem Stand der Technik liegt der Erfindung die Aufgabe zugrunde, ein System zur Gasreinigung zur Verfügung zu stellen, das nicht nur eine besonders gute Reinigungswirkung besitzt, sondern darüber hinaus auch eine weitestgehende Entfeuchtung gewährleistet.

Erfindungsgemäß ist diese Aufgabe durch ein System gelöst, das die Merkmale des Patentanspruches 1 in seiner Gesamtheit aufweist.

Dadurch, dass gemäß dem kennzeichnenden Teil des Patentanspruches 1 an der die obere Begrenzung des Zyklons bildenden Unterseite des Bodens eine Spirale vorgesehen ist, die aus einer aus der Fläche vorspringenden Rippe mit dazwischen liegenden Rillen gebildet ist, ist neben einer besonders guten Reinigungswirkung auch eine weitestgehende Entfeuchtung erreicht, wenn sich an der die Zyklon- oder Strömungskammer oben begrenzenden Wand ein reliefartiges Profil in Form der Spirale befindet. Erfindungsgemäß ist die Einströmöffnung für das zu reinigende Gas derart angeordnet, dass dieses zur Vorentfeuchtung die Kreisringfläche tangential anströmt, und verläuft die Spirale von ihrem äußeren, an der Einströmöffnung befindlichen Ende entgegen der Richtung der Strömung an der Ringfläche nach innen. Eine derartige spiralförmige Konfiguration begünstigt die Anlagerung von Tröpfchen, die auf ein Bodenteil der Vorrichtung abfallen können. Je nach Strömungsverhatten kommt eine unterschiedliche Anzahl von Spiralumlenkungen in Betracht.

Insgesamt weist das System zur Gasreinigung eine Anordnung zur Vorentfeuchtung auf, die das Gas durchströmt bevor es in das eigentliche Coalescer-Gehäuse einströmt. Dergestalt befindet sich das Gas in einem vorkonditionierten Zustand, der die Restentfeuchtung durch Kolasierung an dem betreffenden Filtermedium begünstigt. Dadurch erreicht man eine derart weitgehende Entfeuchtung, dass das gereinigte Gas gegebenenfalls wieder in den Prozess zurückgeführt werden kann.

Die Benutzung eines Zyklons führt zu einer robusten und betriebssicheren Bauweise, da keine beweglichen Bauelemente erforderlich sind. Da der betreffende Zyklon in das Gehäuse, welches auch den Coalescer enthält, integriert ist, zeichnet sich das System durch eine besonders kompakte Bauweise aus.

Bei einer bevorzugten Lösung ist die Anordnung derart getroffen, dass zwischen Auffangbehälter und der Kreisringfläche des Zyklons ein einen Abflusstrichter für die am Zyklon abgeschiedene Flüssigkeit bildendes weiteres Bodenteil als untere Begrenzung des Zyklons vorgesehen ist.

Oberhalb des Bodens, also in dem dem zweiten Raum zugehörigen Bereich, kann das Gehäuse eine Erweiterung aufweisen, die eine Kammer zur Ansammlung von an der Filtereinrichtung koalisierter Flüssigkeit bildet, die über eine in der Wand des Gehäuses vorgesehene Entleerungsöffnung aus der Kammer abführbar ist.

Nachstehend ist die Erfindung anhand eines in der Zeichnung dargestellten Ausführungsbeispieles im einzelnen erläutert. Es zeigen:
- Fig. 1 eine Vorderansicht eines Ausführungsbeispieles des erfindungsgemäßen Systemes mit zwei im Wechsel betreibbaren Coalescer-Gehäusen;
- Fig. 2 einen schematisch vereinfacht gezeichneten Längsschnitt eines Coalescer-Gehäuses des Ausführungsbeispieles;
- Fig. 3 einen der Fig. 2 ähnlichen Längsschnitt, wobei jedoch das Coalescer-Gehäuse gegenüber Fig. 2 um 180° verdreht und ohne darin befindliche Filtereinrichtung dargestellt ist;
- Fig. 4 einen Querschnitt entsprechend der Schnittlinie IV-IV von Fig. 3 und
- Fig. 5 eine perspektivisch und auseinandergezogen gezeichnete Darstellung, in der von einer für das erfindungsgemäße System benutzbaren Filtereinrichtung lediglich Filtermedien sowie stabilisierende Abstützelemente gezeigt sind.

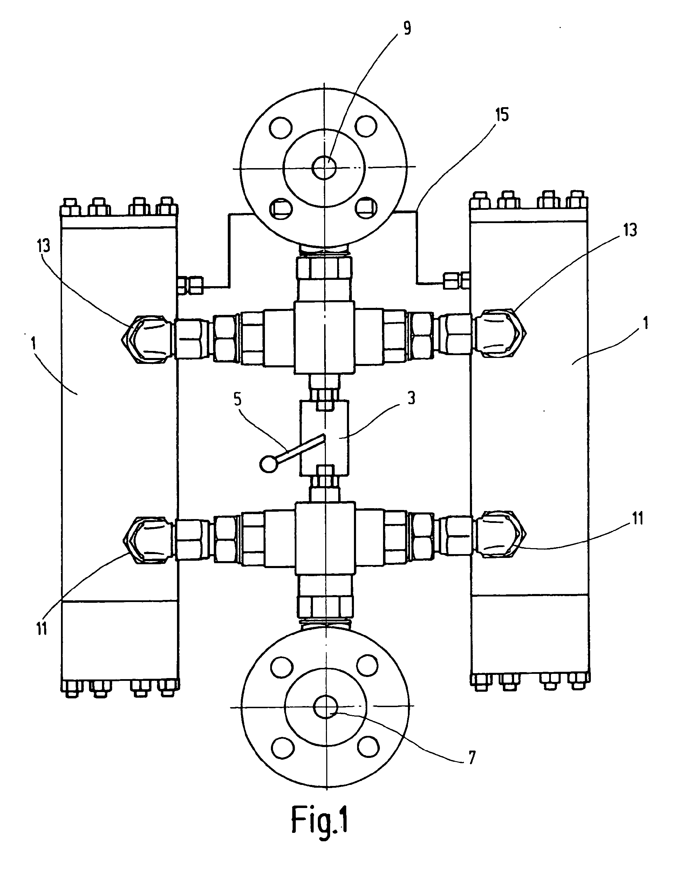

Nachstehend ist die Erfindung anhand eines Ausführungsbeispieles erläutert, bei dem zwei Coalescer-Gehäuse 1, die bis auf eine zueinander spiegelbildliche Anordnung von Gehäuseöffnungen gleich ausgebildet sind, benutzt werden. Den Gehäusen 1 ist eine Umschaltarmatur 3 zugeordnet, die in der in der Technik an sich bekannten Art und Weise eine Umschaltung des den Gehäusen 1 zugeführten Gasstromes und des daraus austretenden Gasstromes in der Weise ermöglicht, dass abwechselnd das eine oder das andere Gehäuse 1 aktiviert ist. Wie aus Fig. 1 zu ersehen, weist die Umschaltarmatur 3 als Steuerelement einen Umschalthebel 5 auf, von dessen Schaltstellung abhängend die Gasströmung von einer Eintrittsarmatur 7 in das eine oder andere Gehäuse eingeleitet wird, von welchem der Gasstrom über eine Austrittsarmatur 9 abgegeben wird. Der Eintritt des Gases erfolgt an den Gehäusen 1 jeweils über eine Einströmöffnung 11. Der Austritt des gereinigten Gasstromes aus dem jeweiligen Gehäuse 1 erfolgt über eine Ausströmöffnung 13. Eine sich zwischen den Gehäusen 1 erstreckende Druckausgleichsleitung ist in Fig. 1 mit 15 bezeichnet.

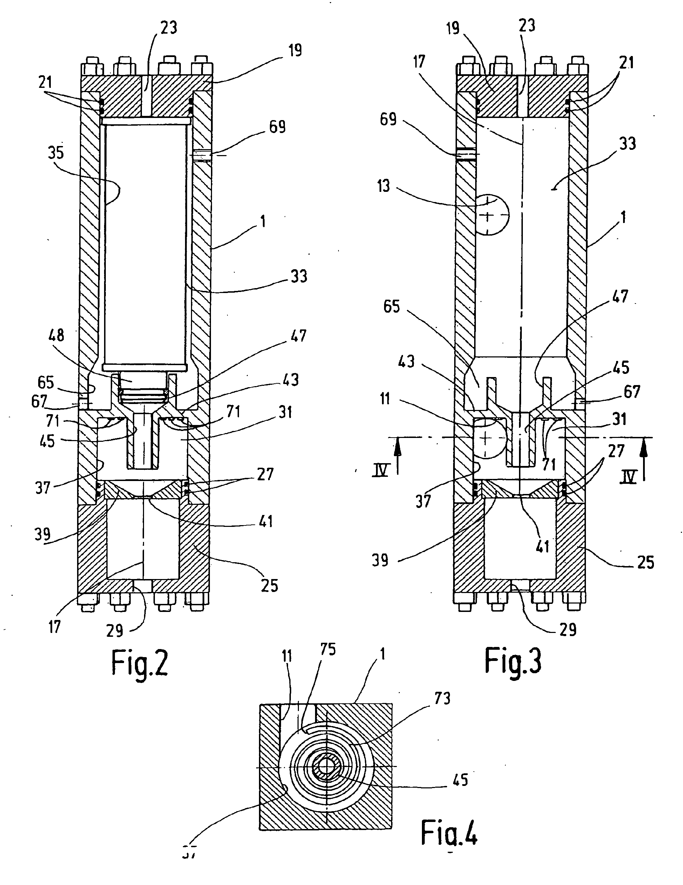

Fig. 2 bis 4 zeigen nähere Einzelheiten eines Ausführungsbeispieles des beim erfindungsgemäßen System benutzbaren Coalescer-Gehäuses 1. Wie ersichtlich ist das Gehäuse 1 als langgestreckter, im Umriss quadratischer Körper gestaltet, dessen Längsachse mit 17 bezeichnet ist. Bei der normalen Einbauposition des jeweiligen Gehäuses 1 ist die Längsachse 17 vertikal ausgerichtet. Am oberen Ende ist das Gehäuse 1 durch ein mit ihm verschraubtes Deckelteil 19 abgeschlossen, wobei Dichtelemente 21 eine druckfeste Abdichtung bilden. Eine zentrale Entlüftungsbohrung im Deckelteil 19 ist mit 23 bezeichnet.

Am entgegengesetzten unteren Ende ist das Gehäuse 1 durch einen mit ihm verschraubten Auffangbehälter 25 abgeschlossen, wobei ebenfalls Dichtelemente 27 eine druckfeste Abdichtung zwischen Auffangbehälter 25 und Gehäuse 1 bilden. An der Unterseite weist der Auffangbehälter 25 eine Entleerungsöffnung 29 auf.

Die verschiedenen Längenabschnitte des Innenraumes des Gehäuses 1 sind jeweils kreiszylindrisch gestaltet, wobei der Innenraum des Gehäuses 1 grundsätzlich in zwei Räume unterteilt ist, nämlich einen ersten Raum 31, der sich an die Einströmöffnung 11 anschließt und in den das zu reinigende Gas einströmt, und einen zweiten Raum 33, siehe Fig. 2, in dem sich das gereinigte Gas befindet, das von diesem zweiten Raum 33 über die Ausströmöffnung 13 austritt.

Erster Raum 33 und zweiter Raum 33 sind durch eine vom Gas durchströmbare Filtereinrichtung 35 voneinander getrennt, die in Fig. 2 lediglich in ihrem Umriss schematisiert angedeutet ist.

Der sich an die Einströmöffnung 11 unmittelbar anschließende Teil des ersten Raumes 31 bildet einen Zyklon zur Vorentfeuchtung des Gases. Zu diesem Zweck ist die Einströmöffnung 11 auf eine innere Kreisringfläche 37 des Gehäuses 1 derart ausgerichtet, dass die Kreisringfläche 37 durch den über die Einströmöffnung 11 eintretenden Gasstrom so angeströmt wird, dass eine Zyklonwirkung entsteht, die eine Vorentfeuchtung aufgrund der Zentrifugalkräfte bewirkt, die auf die entlang der Kreisringfläche 37 verlaufende Strömung einwirken.

Wie Fig. 2 und 3 zeigen, befindet sich zwischen dem oberen Ende des Auffangbehälters 25 und dem unteren Ende der Kreisringfläche 37 des Zyklons ein Bodenteil 39, das für den Zyklon einen trichterartig vertieften Boden mit einer zentralen Abflussöffnung 41 bildet, über die im Zyklon abgeschiedene Flüssigkeit in den Auffangbehälter 25 abfließt.

Oberhalb der Kreisringfläche 37 weist das Gehäuse 1 einen den ersten Raum 31 vom zweiten Raum 33 trennenden Boden 43 auf, an dem ein einen Durchgang 45 bildender Sitz 47 ausgebildet ist, der eine Aufnahme für einen Anschlussstutzen 48 (siehe Fig. 2) der Filtereinrichtung 35 bildet. Dieser Anschlussstutzen 48 führt in den inneren Hohlraum der Filtereinrichtung 35, so dass das im Zyklon vorentfeuchtete Gas aus dem Zyklon in das Innere der Filtereinrichtung 35 gelangt.

Wie sich gezeigt hat, ergibt sich eine besonders gute Entfeuchtungswirkung des Zyklons, wenn sich an der die Zyklon- oder Strömungskammer oben begrenzten Wand ein reliefartiges Profil in Form einer Spirale befindet. Wie aus Fig. 2 bis 4 ersichtlich, ist zu diesem Zweck die Unterseite des Bodens 43, der die Strömungskammer nach oben begrenzt, nicht glattflächig ausgebildet, sondern weist ein Profil auf, das durch eine vorspringende Rippe 71 mit spiraligem Verlauf gebildet ist, zwischen deren Windungen sich Rillen befinden. Wie Fig. 4 zeigt, erstreckt sich die so gebildete Spirale 73 von ihrem äußeren, an der Einströmöffnung 11 gelegenen Anfang 75 spiralig nach innen und zwar entgegen der Richtung der Zyklonströmung an der Kreisringfläche 37. Eine derartige Konfiguration begünstigt die Anlagerung von Tröpfchen, die auf das Bodenteil 39 abfallen. Je nach Strömungsverhältnissen kommt eine unterschiedliche Anzahl von Spiralumdrehungen in Betracht.

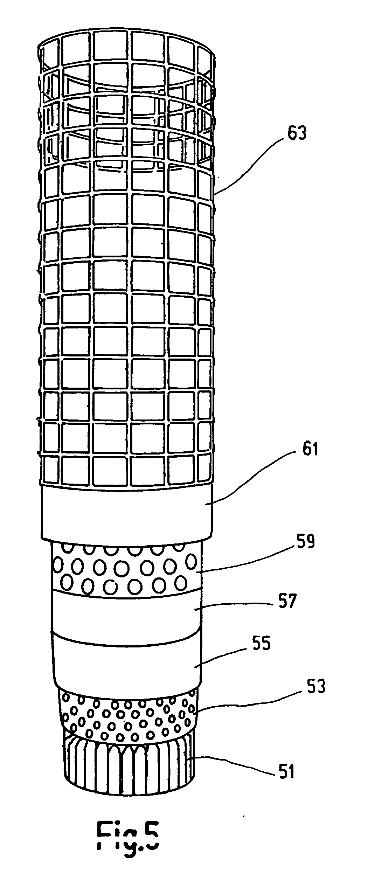

Wie in Fig. 5 verdeutlicht, ist der innere Hohlraum der Filtereinrichtung 35 von Filtermedien und Abstützelementen umgeben, die von dem vorentfeuchteten Gas von innen nach außen durchströmt werden, wobei die Filtermedien so beschaffen sind, dass sowohl eine Abscheidung von Feststoffpartikeln als auch eine Entfeuchtung durch Abscheidung koalisierter Flüssigkeit erfolgt. Zu diesem Zweck weist die Filtereinrichtung als innere Lagen, die zur Partikelabscheidung dienen, sterngefaltete Drahtgewebe und sterngefaltetes Filterpapier auf. Diese Lagen sind in Fig. 5 mit 51 bezeichnet. Nach außen schließt sich ein Lochblech 53 zur Stabilisierung an. Über diesem befindet sich ein Glasfasergewebe 55 zur Koalisierung. Es folgt ein Drahtgewebe 57 zur Drainage, über dem ein Lochblech 59 zur Stabilisierung angeordnet ist. Über diesem befindet sich ein Nadelfilz 61 zur Flüssigkeitsableitung. Ein Metallkorb 63 bildet schließlich die äußere Einfassung der Baueinheit.

Wie Fig. 2 und 3 zeigen, befindet sich oberhalb des Bodens 43 im Gehäuse 1 eine zum zweiten Raum 33 gehörende Erweiterung, die eine Kammer 65 zur Ansammlung von an der Filtereinrichtung 35 koalisierter Flüssigkeit bildet, die über eine Abflussöffnung 67 abführbar ist. Eine für den Anschluss der Druckausgleichsleitung 15 (Fig. 1) vorgesehene Öffnung im oberen Bereich des Gehäuses 1 ist mit 69 bezeichnet. Es versteht sich, dass die am Gehäuse 1 außer der Einströmöffnung 11 und der Ausströmöffnung 13 zusätzlich vorgesehenen Öffnungen 23, 29, 67 und 69 jeweils mit nicht gezeigten, druckfesten Armaturen versehen sind.

Während die Erfindung anhand eines Beispieles beschrieben ist, bei dem zwei Coalescer-Gehäuse 1 im Wechsel durch Betätigen einer Umschaltarmatur 3 betreibbar sind, versteht sich, dass ein andersartiger Systemaufbau mit nur einem Coalescer-Gehäuse oder einer anderen Anzahl von Gehäusen vorgesehen sein kann. Anstelle eines in das Gehäuse 1 integrierten Zyklons könnte die Vorentfeuchtung andersartig erfolgen, beispielsweise mit einem oder mehreren, dem Gehäuse vorgeschalteten Zyklonen. Die Benutzung zueinander nebengeschalteter Zyklone kann ebenfalls vorgesehen sein, insbesondere in Fällen, wo Gasströme unterschiedlicher Volumenströme oder unterschiedlicher Strömungsgeschwindigkeit zu handhaben sind.

## Patentansprüche

1. System zur Gasreinigung,
- das mindestens ein Gehäuse (1) aufweist, mit einem ersten Raum (31), in den das zu reinigende Gas einströmt, und mit einem zweiten Raum (33), aus dem das gereinigte Gas austritt,
- wobei zwischen den genannten Räumen (31, 33) eine vom Gas durchströmbare Filtereinrichtung (35) angeordnet ist, die sich entlang der Längsachse (17) des Gehäuses (1) erstreckt, und die Filtermedien sowohl zur Absonderung von Feststoffpartikeln als auch zur Entfeuchtung des Gases durch Abscheidung koalisierter Flüssigkeit aufweist,
- wobei das System stromaufwärts der Filtereinrichtung (35) eine Anordnung (11,37) zur Vorentfeuchtung des Gases in Form eines Zyklons aufweist,
- wobei die Filtereinrichtung (35) für das zu reinigende Gas einen inneren Hohlraum aufweist, der von den Filtermedien (51,55,57,61) umgeben ist, zwischen deren Außenseite und der Innenwand des Gehäuses (1) sich der zweite Raum (33) befindet,
- wobei das Gehäuse (1) am oberen Ende der einen Zyklon bildenden Kreisringfläche (37) einen den ersten Raum (31) vom zweiten Raum (33) trennenden Boden (43) aufweist, an dem ein einen Durchgang (45) bildender Sitz (47) ausgebildet ist für einen Anschlussstutzen (48) der Filtereinrichtung (35), über den das vorentfeuchtete Gas aus dem Zyklon in den Hohlraum der Filtereinrichtung (35) einströmt, und
- wobei am Gehäuse (1) eine Einströmöffnung (11) für das zu reinigende Gas derart angeordnet ist, dass dieses die Kreisringfläche (37) anströmt,
- **dadurch gekennzeichnet, dass** an der die obere Begrenzung des Zyklons bildenden Unterseite des Bodens (43) eine Spirale (73) vorgesehen ist, die aus einer aus der Fläche vorspringenden Rippe (71) mit dazwischen liegenden Rillen gebildet ist,
- dass die Einströmöffnung (11) für das zu reinigende Gas derart angeordnet ist, dass dieses zur Vorentfeuchtung die Kreisringfläche (37) tangential anströmt, und
- dass die Spirale (73) von ihrem äußeren, an der Einströmöffnung (11) befindlichen Ende (75) entgegen der Richtung der Strömung an der Ringfläche (37) nach innen verläuft.

2. System nach Anspruch 1, **dadurch gekennzeichnet, dass** das Gehäuse (1) in normaler Einbauposition die zumindest näherungsweise vertikal verlaufende Längsachse (17) definiert und dass der erste Raum (31) im unteren Abschnitt des Gehäuses (1) gelegen und seitlich durch eine Kreisringfläche (37) begrenzt ist, die vorzugsweise zur Längsachse (17) konzentrisch ist.

3. System nach Anspruch 1 oder 2, **dadurch gekennzeichnet, dass** das Gehäuse (1) am unteren Ende durch einen Auffangbehälter (25) abgeschlossen ist, der die bei der Vorentfeuchtung abgeschiedene Flüssigkeit aufnimmt.

4. System nach Anspruch 3, **dadurch gekennzeichnet, dass** zwischen Auffangbehälter (25) und der Kreisringfläche (37) des Zyklons eine einen Abflusstrichter für die am Zyklon abgeschiedene Flüssigkeit bildendes Bodenteil (39) als untere Begrenzung des Zyklons vorgesehen ist.

5. System nach einem der Ansprüche 1 bis 4, **dadurch gekennzeichnet, dass** das Gehäuse (1) oberhalb des am oberen Ende des Zyklons gelegenen Bodens (43) eine Erweiterung aufweist, die eine Kammer (65) zur Ansammlung von an der Filtereinrichtung (35) koalisierter Flüssigkeit bildet, die über eine in der Wand des Gehäuses (1) vorgesehene Entleerungsöffnung (67) aus der Kammer (65) abführbar ist.

## Claims

1. A system for gas cleaning
- which has at least one housing (1) with a first chamber (31) into which the gas to be cleaned flows, and with a second chamber (33) from which the cleaned gas emerges,
- between the aforementioned chambers (31, 33) there being a filter device (35) through which gas can flow and which extends along the longitudinal axis (17) of the housing (1), and which has filter media both for the separation of solid particles and also for dehydration of the gas by precipitation of coalesced liquid,
- the system having an arrangement (11, 37) for preliminary dehydration of the gas in the form of a cyclone upstream of the filter device (35),
- the filter device (35) for the gas to be cleaned having an inner cavity that is surrounded by the filter media (51, 55, 57, 61) between the outside of which and the inner wall of the housing (1) the second chamber (33) is located,
- the housing (1) at the upper end of the circular ring surface (37) forming a cyclone having a floor (43) separating the first chamber (31) from the second chamber (33) on which a seat (47) forming a passageway (45) is formed for a connection sleeve (48) of the filter device (35) via which the gas which has been dehydrated beforehand flows out of the cyclone into the cavity of the filter device (35), and
- there being located on the housing (1) an inflow opening (11) for the gas to be cleaned such that the latter is incident on the circular ring surface (37),
- **characterised in that** on the bottom of the floor (43) which forms the upper boundary of the cyclone there is a spiral (73) which is formed from a rib (71) which projects from the surface, with grooves located in between,
- that the inflow opening (11) for the gas to be cleaned is arranged such that the gas is tangentially incident on the circular ring surface (37) for preliminary dehydration, and
- that the spiral (73) runs to the inside from its outer end (75) which is located on the inflow opening (11) opposite the direction of the flow on the ring surface (37).

2. The system according to Claim 1, **characterised in that** the housing (1) in the normal installation position defines the longitudinal axis (17) which runs at least almost vertically and that the first chamber (31) is located in the lower section of the housing (1) and is bordered laterally by a circular ring surface (37) which is preferably concentric to the longitudinal axis (17).

3. The system according to Claim 1 or 2, **characterised in that** the housing (1) on the lower end is closed off by a collecting tank (25) which holds the liquid which has been precipitated during preliminary dehydration.

4. The system according to Claim 3, **characterised in that** between the collecting tank (25) and the circular ring surface (37) of the cyclone there is a floor part (39) which forms a drain funnel for the liquid which has precipitated on the cyclone as the lower boundary of the cyclone.

5. The system according to any of Claims 1 to 4, **characterised in that** the housing (1) above the floor (43) which is located on the top end of the cyclone has a widening which forms a chamber (65) for collection of fluid which has coalesced on the filter device (35) and which can be removed from the chamber (65) via an evacuation opening (67) which is provided in the wall of the housing (1).

## Revendications

1. Système d'épuration de gaz,
- qui a au moins un corps (1) ayant une première chambre (31), dans laquelle le gaz à épurer afflue, et une deuxième chambre (33), dont le gaz épuré sort,
- dans lequel, entre lesdites chambres (31, 33), est monté un dispositif (35) de filtration, qui peut être traversé par le gaz, qui s'étend le long de l'axe (17) longitudinal du corps (1) et qui a des milieux filtrants, tant pour la séparation de particules de matière solide qu'également pour la déshumidification du gaz par dépôt de liquide en coalescence,
- dans lequel le système a, en amont du dispositif (35) de filtration, un agencement (11, 37) de déshumidification préalable du gaz sous la forme d'un cyclone,
- dans lequel le dispositif (35) de filtration a, pour le gaz à épurer, un espace vide intérieur, qui est entouré des milieux (55, 55, 57, 61) filtrants, entre la face extérieure desquels et la paroi intérieure du corps (1) se trouve la deuxième chambre (33),
- dans lequel le corps (1) a, à l'extrémité supérieure de la surface (37) annulaire circulaire formant un cyclone, un plateau (43), qui sépare la première chambre (31) de la deuxième chambre (33) et sur lequel est formé un siège (47) formant un passage (45) pour une tubulure (48) de raccordement du dispositif (35) de filtration, tubulure par laquelle le gaz déshumidifié au préalable afflue du cyclone dans l'espace vide du dispositif (35) de filtration, et
- dans lequel il est monté dans le corps (1) une ouverture (11) d'afflux pour le gaz à épurer, de manière à ce que celui-ci passe sur la surface (37) annulaire circulaire,
- **caractérisé en ce que**, sur la face inférieure du plateau (43) formant la démarcation supérieure du cyclone, est prévue une spirale (73), qui est formée d'une nervure (71) en saillie de la surface avec des rainures intermédiaires,
- **en ce que** l'ouverture (11) d'afflux pour le gaz à épurer est disposée de manière à ce que celui-ci passe tangentiellement sur la surface (37) annulaire circulaire pour la déshumidification préalable, et
- **en ce que** la spirale (73) s'étend vers l'intérieur à partir de son extrémité (75) extérieure, se trouvant à l'ouverture (11) d'afflux dans le sens contraire du courant sur la surface (37) annulaire.

2. Système suivant la revendication 1, **caractérisé en ce que** le corps (1) définit dans la position de montage normale l'axe longitudinal s'étendant au moins à peu près verticalement, et **en ce que** la première chambre (31) est dans la partie inférieure du corps (1) et est délimitée latéralement par une surface (37) annulaire circulaire, qui, de préférence, est concentrique à l'axe (17) longitudinal.

3. Système suivant la revendication 1 ou 2, **caractérisé en ce que** le corps (1) est fermé à l'extrémité inférieure par un récipient (35) de captage, qui reçoit le liquide séparé lors de la déshumidification préalable.

4. Système suivant la revendication 3, **caractérisé en ce qu'**il est prévu, entre le récipient (25) de captage et la surface (37) annulaire circulaire du cyclone, comme délimitation inférieure du cyclone, une partie (39) de plateau formant un entonnoir d'évacuation du liquide séparé dans le cyclone.

5. Système suivant l'une des revendications 1 à 4, **caractérisé en ce que** le corps (1) a, au-dessus du plateau (43) se trouvant à l'extrémité supérieure du cyclone, un élargissement, qui forme une chambre (65) pour recueillir du liquide en coalescence sur le dispositif (35) de filtration, liquide qui peut, par une ouverture (67) de vidange prévue dans la paroi du corps (1), être évacué de la chambre (65).
